# EUROPÄISCHE PATENTSCHRIFT

(11) **EP 2 082 221 B1**
(45) Veröffentlichungstag und Bekanntmachung des Hinweises auf die Patenterteilung: **14.12.2016**
(21) Anmeldenummer: 07818152.6
(22) Anmeldetag: 14.09.2007
(51) Int. Cl.: G01N 27/64, H01J 49/16, G01N 27/62, H01J 49/10

(54) **VERFAHREN ZUR ERZEUGUNG VON POSITIV UND/ODER NEGATIV IONISIERTEN GASANALYTEN FÜR DIE GASANALYSE**
METHOD FOR PRODUCING POSITIVELY AND/OR NEGATIVELY IONIZED GAS ANALYTES FOR GAS ANALYSIS
PROCÉDÉ DE FORMATION D'ANALYTES GAZEUX IONISÉS POSITIVEMENT ET/OU NÉGATIVEMENT EN VUE D'UNE ANALYSE DU GAZ

(30) Priorität: 25.10.2006 DE 102006050136
(43) Veröffentlichungstag der Anmeldung: 29.07.2009
(73) Patentinhaber: Leibniz - Institut für Analytische Wissenschaften - ISAS - e.V., 44139 Dortmund (DE)
(72) Erfinder: BAUMBACH, Jörg Ingo, 44141 Dortmund (DE); VAUTZ, Wolfgang, 59425 Unna (DE); MICHELS, Antje, 44359 Dortmund (DE); FRANZKE, Joachim, 44229 Dortmund (DE)
(74) Vertreter: Meinke, Dabringhaus und Partner GbR
(86) Internationale Anmeldenummer: PCT/EP2007/007999
(87) Internationale Veröffentlichungsnummer: WO 2008/049488

(56) Entgegenhaltungen:
- GB-A- 2 252 160
- US-A1- 2002 011 561
- US-A1- 2003 070 913
- US-A1- 2005 195 393
- US-B1- 6 359 275
- US-B1- 6 486 469

## Beschreibung

Die Erfindung betrifft ein Verfahren zur Erzeugung von positiv und/oder negativ ionisierten Gasanalyten für die Gasanalyse in einem Ionenmobilitäts- oder in einem Massenspektrometer.

Die Ionenmobilitätsspektrometrie ist eine Methode zur Charakterisierung gasförmiger chemischer Substanzen über ihre Mobilität in der Gasphase bei Atmosphärendruck. Ein Trägergas transportiert die Analytmoleküle in den Ionisierungsraum, wo ultraviolettes Licht, β-Strahlung oder Teilentladungen verwendet werden, um die Moleküle zu ionisieren. Die so entstehenden Ionen werden in einem elektrischen Feld in Richtung des Detektors beschleunigt. Dabei bewegen sie sich entgegengesetzt zur Strömungsrichtung des Driftgases und stoßen mit den Driftgasmolekülen zusammen. Dies bewirkt ein Abbremsen der Ionen abhängig von ihrer Masse, Form und Ladung. Aus der Zeit, welche die Ionen benötigen, um den Detektor zu erreichen (Driftzeit), und der elektrischen Feldstärke wird die Mobilität der Ionen berechnet, mit deren Hilfe ein Analyt identifiziert werden kann. Die Bestimmung der Signalfläche im Vergleich mit einer vorhergegangenen Kalibrierung erlaubt außerdem die quantitative Bestimmung der detektierten Substanz.

Ionenmobilitätsspektrometer (IMS) werden für vielfältige Anwendungen eingesetzt, wie z.B. Erkennung chemischer Kampfstoffe, Sprengstoffe und Drogen. Ferner werden sie z.B. zur Prozesskontrolle, zur Überwachung von Luftqualität in Innenräumen, für die Lebensmittelqualität und -sicherheit und zur Früherkennung von Lungenkrankheiten eingesetzt. Die typischen Nachweisgrenzen für diese Anwendungen liegen im ng/L bis pg/L bzw. ppbᵥ bis pptᵥ Bereich.

Zur Durchführung der Ionenmobilitätsspektrometrie und auch zur Molekülmassenspektrometrie ist es erforderlich, das Analytgas zu ionisieren. Bisher verwendete Ionisierungsmethoden sind ultraviolettes Licht, elektrische Teilentladungen und β-Strahlung, die jeweils mit spezifischen Nachteilen verbunden sind:
- Ultraviolettlicht: geringe Sensitivität, nur Erzeugung positiver Ionen,
- elektrische Teilentladung: geringe langfristige Stabilität,
- β-Strahlung: radioaktive Strahlung, welche nicht für alle Anwendungsfälle geeignet ist oder zulassungsbedürftig ist.

Im Rahmen der Miniaturisierung analytischer Instrumente und Methoden besteht ein starkes Interesse an miniaturisierten Plasmaquellen oder Plasmaquellen, die in einen Mikrochip implementiert werden können. Ein vielversprechender Ansatz dazu ist die dielektrisch behinderte Entladung, die bereits im Jahre 1857 von Siemens im Hinblick auf die Ozonproduktion entdeckt wurde. Derartige Entladungen wurden bisher z.B. in Plasmadisplays für Farbbildschirme, in UV-Strahlungsquellen und CO₂-Lasern, zur Abgasreinigung, zur Plasmakatalyse von Methanol und zur Produktion von Ozon verwendet.

Aufgabe der Erfindung ist es, eine Lösung zu schaffen, mit der ein Gasanalyt ohne die Beschränkungen bisheriger Ionisierungsmethoden für die Gasanalyse in einem Ionenmobilitäts- oder in einem Massenspektrometer unter Bildung von positiven und/oder negativen Ionen ionisiert werden kann.

Diese Aufgabe wird bei einem Verfahren der eingangs bezeichneten Art erfindungsgemäß dadurch gelöst, dass die positiven und/oder negativen Gasionen durch ein Plasma erzeugt werden, welches durch eine dielektrisch behinderte Entladung hervorgerufen wird, wobei die dielektrisch behinderte Entladung dadurch erzeugt wird, dass ein Edelgas durch eine Kapillare aus einem dielektrischen Material zugeführt wird, wobei mittels zweier angrenzend an den Austrittsbereich der Kapillare an der Kapillare angeordneten, elektrisch isolierten Elektroden eine Wechselspannung angelegt und der Gasanalyt dem Austrittsbereich außerhalb der Kapillare zugeführt wird.

Durch eine derartige miniaturisierte dielektrisch behinderte Entladung ist es möglich, positive und negative Gasionen des Gasanalyten zu erzeugen, ohne die Beschränkungen der bisher bekannten Ionisierungsmethoden für Ionenmobilitätsspektrometer und Massenspektrometer aufzuweisen. Der Vorteil des Verfahrens gegenüber einer β-Strahlung als Ionisierungsquelle liegt bei gleichbleibender Selektivität und Sensitivität im Verzicht auf radioaktives Material, welches eine Einschränkung der Einsetzbarkeit mit sich bringt bzw. eine Umgangsgenehmigung voraussetzt. Der Vorteil im Vergleich zu UV-Licht als Ionisierungsquelle ist die höhere Sensitivität und Selektivität insbesondere, da mittels dieser Plasmaionisation im Gegensatz zu Uv-Licht auch negative Ionen bereitgestellt und detektiert werden können. Da bei einem Ionenmobilitätsspektrometer die Stromversorgung des Plasmas mit der Hochspannung der Driftstrecke kombiniert werden kann, ist außerdem keine zusätzliche Stromversorgung, wie bei der Versorgung einer UV-Lampe, notwendig. Der Vorteil im Vergleich zu einer Teilentladung als Ionisierungsquelle liegt bei gleichbleibender Sensitivität und Selektivität in der höheren Langzeitstabilität. Ferner ist gegenüber der Teilentladung ebenfalls keine zusätzliche Stromversorgung für die Plasmaionenquelle notwendig.

Der Gasanalyt wird z.B. in üblicher Weise in den Ionisationsraum eines Ionenmobilitätsspektrometers geführt, in welchen der Austrittsbereich der Kapillare hineinragt. Der Gasanalyt strömt dann außerhalb an der Kapillare vorbei und wird durch das Plasma ionisiert.

Dabei wird bevorzugt eine Wechselspannung im Bereich von 500 V bis 5000 V verwendet und die dielektrisch behinderte Entladung bei Umgebungsdruck betrieben. In Abhängigkeit vom eingestellten Druck, dem Fluss zwischen den Elektroden, dem verwendeten Edelgas (vorzugsweise Helium oder Argon) und dem Ort der angelegten Masse bildet sich ein Plasma zwischen den Elektroden und außerhalb der Kapillare aus. Das Plasma außerhalb der Kapillare stellt eine Plasmafackel dar. Das Ende der Kapillare bzw. deren Austrittsbereich läßt sich als Ionisierungsquelle z.B. in die Ionisierungskammer eines Ionenmobilitätsspektrometers integrieren.

Ortsaufgelöste spektroskopische Emissionsmessungen zeigten, dass die Orte maximaler Anregung abhängig vom Gasfluss sind. Je höher der Gasfluss, desto weiter befinden sich die angeregten atomaren Zustände am Ende der Kapillare. Weiter als 2 - 3 cm außerhalb der Kapillare sind allerdings keine Emissionslinien zu messen, da aufgrund von Stößen die Energie übertragen wird. Es zeigt sich, dass in dieser Entladung die Emission angeregter Stickstoffmoleküle höher ist als die Emission angeregter atomarer Zustände. Es ist zu vermuten, dass, wie auch beim β-Strahler, die positive Ionisierung über Protonierung und die negative Ionisierung durch Elektronenanlagerung abläuft. Damit ist eine Kombination mit Ionenmobilitätsspektrometern auch in miniaturisierter Form möglich, insbesondere, da auch das Plasma bei Atmosphärendruck betrieben werden kann.

Um das Verfahren durchzuführen kann eine Vorrichtung benutzt werden, die gekennzeichnet ist durch eine Kapillare aus einem dielektrischen Material zur Zuführung eines Edelgases, wobei angrenzend an den Austrittsbereich der Kapillare zwei mit Wechselspannung beaufschlagte, elektrisch isolierte Elektroden an der Kapillare angeordnet sind. Diese Vorrichtung gehört nicht zur Erfindung. Bevorzugt besteht dabei die Kapillare aus Glas und weist einen Innendurchmesser zwischen 50 und 500 µm auf. Die Wandstärke der Kapillare liegt in einer Größenordnung von 350 µm.

Die in Längsrichtung der Kapillare voneinander beabstandeten Elektroden sind dabei bevorzugt in einem maximalen Abstand von 1 cm angeordnet. Die Kapillare und die Elektroden können bevorzugt in eine Ummantelung aus einem elektrisch isolierenden Material integriert sein.

Bevorzugt wird die Vorrichtung, die nicht zur Erfindung gehört, in einem Ionenmobilitätsspektrometer verwandt, wobei sich der Austrittsbereich der Kapillare je nach Anforderungen und Aufbau des Ionenmobilitätsspektrometers radial oder axial in den Ionisationsraum des Ionenmobilitätsspektrometers erstreckt.

Ferner wird die Vorrichtung bevorzugt in einem (Molekül-) Massenspektrometer verwandt.

Die Erfindung ist nachstehend anhand der Zeichnung beispielhaft näher erläutert. Diese zeigt in:
Fig. 1 eine schematische vergrößerte Darstellung einer nichterfindungsgemäßen Vorrichtung,
Fig. 2 eine Prinzipskizze eines Ionenmobilitätsspektrometers mit einer nichterfindungsgemäßen Vorrichtung in einer ersten Einbausituation und
Fig. 3 ein Ionenmobilitätsspektrometer mit einer nicht- erfindungsgemäßen Vorrichtung in einer zweiten Einbausituation.

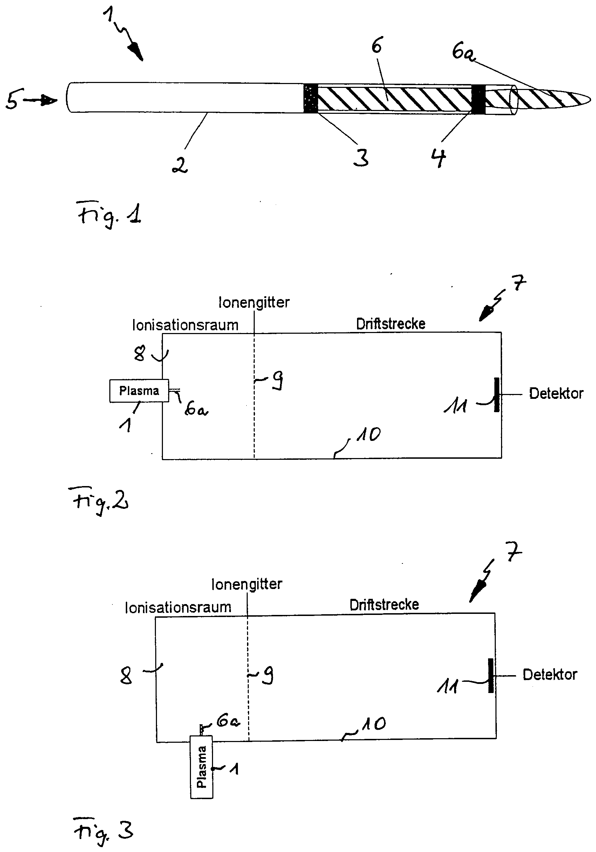

Eine Vorrichtung zur Erzeugung von positiv und/oder negativ ionisierten Gasanalyten für die Gasanalyse in einem Ionenmobilitäts- oder in einem Massenspektrometer ist in Figur 1 allgemein mit 1 bezeichnet. Diese Vorrichtung 1 weist eine Kapillare 2 auf, die vorzugsweise aus Glas besteht und einen Innendurchmesser zwischen 50 bis 500 µm bei einer Wandstärke von etwa 350 µm aufweist. Im vorderseitigen Austrittsbereich dieser Kapillare 2 sind in Längsrichtung der Kapillare 2 beabstandet voneinander zwei z.B. ringförmige Elektroden 3, 4 angeordnet, welche außenseitig die Kapillare 2 umgeben. Der Abstand zwischen den Elektroden 3, 4 beträgt etwa maximal 1 cm. Die Kapillare 2 und die Elektroden 3, 4 sind vorzugsweise in eine nicht dargestellte elektrisch isolierende Ummantelung eingebettet.

Durch die Kapillare 2 wird in Richtung eines Pfeiles 5 ein Edelgas zugeführt, vorzugsweise Helium oder Argon. An die Elektroden 3, 4 wird eine Wechselspannung zwischen 500 und 5000 V angelegt, so dass sich je nach dem eingestellten Druck, dem Fluss zwischen den Elektroden 3, 4, dem verwendeten Edelgas und dem Ort der angelegten Masse ein Plasma 6 zwischen den Elektroden 3, 4 und außerhalb des Austrittsbereiches der Kapillare 2 ausbildet. Das Plasma 6 außerhalb der Kapillare 2 stellt eine Plasmafackel 6a dar. Der Gasanalyt wird dem Austrittsbereich der Kapillare 2 außerhalb der Kapillare 2 zugeführt, bzw. strömt an diesem vorbei und wird dabei ionisiert.

Eine solche Vorrichtung 1 kann als Ionisierungsquelle für ein Ionenmobilitätsspektrometer verwendet werden.

Ein solches Ionenbeweglichkeitsspektrometer ist schematisch in den Figuren 2 und 3 dargestellt und allgemein mit 7 bezeichnet. Dieses Ionenmobilitätsspektrometer 7 weist einen Ionisationsraum 8, ein Ionengitter 9, eine Driftstrecke 10 und endseitig der Driftstrecke 10 (bzw. des Driftraumes) einen Detektor 11 auf. Dem Ionisationsraum 8 wird der Gasanalyt durch einen nicht dargestellten Gaseinlass zugeführt, der Gasanalyt strömt von außen am Austrittsbereich der Kapillare 2 bzw. an der Plasmafackel 6a vorbei und wird ionisiert.

In Figur 2 ist die nichterfindungsgemässe Vorrichtung 1 als Ionisierungsquelle axial im Ionisationsraum des Ionenmobilitätsspektrometers 7 angeordnet.

Wie Figur 3 zeigt, kann alternativ die Anordnung auch so getroffen sein, dass die Vorrichtung 1 radial im Ionisationsraum 8 angeordnet ist.

Der mittels eines Trägergases oder dergleichen durch den Gaseinlass zugeführte, zu analysierende Gasanalyt wird im Ionisationsraum 8 des Ionenmobilitätsspektrometers 7 durch die Vorrichtung 1 bzw. das dort gebildete Plasma in positive und/oder negative Analytionen ionisiert. Die Ionisation erfolgt dabei vorzugsweise bei Atmosphärendruck.

Die Vorrichtung 1 kann nicht nur für die Gasanalyse in einem Ionenmobilitätsspektrometer 7 verwendet werden, sondern auch in einem (Molekül-) Massenspektrometer, was zeichnerisch nicht dargestellt ist, die Anordnung der Vorrichtung 1 am (Molekül-) Massenspektrometer ist dann in ähnlicher Weise gestaltet wie bei einem Ionenmobilitätsspektrometer.

## Patentansprüche

1. Verfahren zur Erzeugung von positiv und/oder negativ ionisierten Gasanalyten für die Gasanalyse in einem Ionenmobilitäts- oder in einem Massenspektrometer,
**dadurch gekennzeichnet,**
**dass** die positiven und/oder negativen Gasionen durch ein Plasma (6) erzeugt werden, welches durch eine dielektrisch behinderte Entladung hervorgerufen wird, wobei die dielektrisch behinderte Entladung dadurch erzeugt wird, dass ein Edelgas durch eine Kapillare (2) aus einem dielektrischen Material zugeführt wird,
wobei mittels zweier angrenzend an den Austrittsbereich der Kapillare an der Kapillare angeordneten, elektrisch isolierten Elektroden (3, 4) eine Wechselspannung angelegt und der Gasanalyt dem Austrittsbereich außerhalb der Kapillare zugeführt wird.

2. Verfahren nach Anspruch 1,
**dadurch gekennzeichnet,**
**dass** eine Wechselspannung im Bereich von 500 V bis 5000 V verwendet wird.

3. Verfahren nach Anspruch 1 oder 2,
**dadurch gekennzeichnet,**
**dass** die dielektrisch behinderte Entladung bei Umgebungsdruck betrieben wird.

## Claims

1. Method for producing positively and/or negatively ionised gas analytes for gas analysis in an ion mobility or a mass spectrometer,
**characterised in that**
the positive and/or negative gas ions are produced by a plasma (6)
brought about by a dielectrically impeded discharge, wherein the dielectrically hindered discharge is produced by feeding in a noble gas through a capillary (2)
composed of a dielectric material,
wherein an alternating voltage is applied by means of two electrically insulated electrodes (3, 4)
arranged at the capillary in a manner adjoining the exit region of the capillary and the gas analyte is fed to the exit region outside the capillary.

2. Method according to Claim 1,
**characterised in that**
an alternating voltage ranging from 500 V to 5000 V is used.

3. Method according to Claim 1 or 2,
**characterised in that**
the dielectrically impeded discharge is operated at ambient pressure.

## Revendications

1. Procédé de production d'analytes gazeux ionisés positivement et/ou négativement en vue de l'analyse d'un gaz dans un spectromètre à mobilité ionique ou dans un spectromètre de masse,
**caractérisé en ce que** :
les ions gazeux positifs et/ou négatifs sont produits par un plasma (6) qui est formé par une décharge à barrière diélectrique, dans lequel la décharge à barrière diélectrique est produite en acheminant un gaz rare à travers un capillaire (2) formé d'un matériau diélectrique,
dans lequel une tension alternative est appliquée au moyen de deux électrodes (3, 4) isolées électriquement agencées sur le capillaire au voisinage de la zone de sortie du capillaire et l'analyte gazeux est acheminé à la zone de sortie à l'extérieur du capillaire.

2. Procédé selon la revendication 1,
**caractérisé en ce que**
l'on utilise une tension alternative dans la plage de 500 V à 5000 V.

3. Procédé selon la revendication 1 ou 2,
**caractérisé en ce que**
la décharge à barrière diélectrique est effectuée à la pression ambiante.
